# FASCICULE DE BREVET EUROPEEN

(11) **EP 2 702 293 B1**
(45) Date de publication et mention de la délivrance du brevet: **17.06.2015**
(21) Numéro de dépôt: 12719637.6
(22) Date de dépôt: 26.04.2012
(51) Int. Cl.: F16D 65/12

(54) **DISQUE DE FREIN FERROVIAIRE**
SCHIENENBREMSSCHEIBE
RAIL BRAKE DISK

(30) Priorité: 27.04.2011 FR 1153604
(43) Date de publication de la demande: 05.03.2014
(73) Titulaire: Safe Metal, 69003 Lyon (FR); SNCF MOBILITES, 93200 Saint-Denis (FR)
(72) Inventeur: MARCHAND, Fabrice, F-42330 Saint Galmier (FR); BUFFECHOUX, Michel, F-72000 Le Mans (FR); ROUYER, Patrick, F-72100 Le Mans (FR)
(74) Mandataire: Myon, Gérard Jean-Pierre
(86) Numéro de dépôt international: PCT/EP2012/057670
(87) Numéro de publication internationale: WO 2012/146665

(56) Documents cités:
- WO-A1-2010/071169
- DE-A1- 2 315 134
- DE-B- 1 137 065
- DE-U- 6 609 470
- GB-A- 2 034 833
- GB-A- 2 128 695
- GB-A- 2 132 290
- US-A1- 2001 002 638

## Description

La présente invention concerne un disque de frein ferroviaire. Le domaine de l'invention est celui des systèmes de freinage pour matériel roulant ferroviaire, du type rames de train, tramway ou métro.

De manière connue, un disque de frein du type flasqué sur roue est destiné, d'une part, à être rendu solidaire d'une roue à freiner et, d'autre part, à coopérer en freinage avec une garniture de freinage. Cette garniture est montée sur une mâchoire mobile et susceptible d'être mise en contact avec le disque sous l'effet d'organes de commande. Généralement, et plus particulièrement dans les trains à grande vitesse, des disques sont montés de part et d'autre de la roue afin d'améliorer l'efficacité de freinage. Lors d'une phase de freinage à grande vitesse, les disques peuvent atteindre une température élevée, de l'ordre de 900 °C.

En pratique, la température de freinage et les contraintes exercées par les garnitures et mâchoires ont tendance à déformer les disques, en particulier lorsque ces disques sont réalisés de manière monobloc. Plus précisément, les disques se déforment en formant un cône rentrant, avec pour conséquence possible leur expulsion de la roue.

Par ailleurs, les disques subissent des déformations, non seulement en service, mais également lors de leur fabrication. Ces déformations sont accentuées avec les disques monoblocs, du fait de leurs dimensions importantes. En particulier, un voilage du disque est susceptible d'entraîner un mauvais équilibrage en freinage et une usure prématurée des garnitures qui ne viennent pas en contact avec une surface parfaitement plane.

Il est connu de rigidifier les disques de frein en les munissant de nervures radiales, permettant ainsi d'améliorer le contact des disques avec le flan de la roue et de créer des ailettes de refroidissement, voir par exemple DE 6609470U. De telles nervures radiales sont néanmoins insuffisantes pour maîtriser les déformations à des températures élevées, telles que mentionnées ci-dessus.

Un autre inconvénient des disques monoblocs est leur poids très important, nécessitant l'intervention d'au moins deux opérateurs pour effectuer leur pose et leur dépose, voire l'utilisation de systèmes de manutention et même l'extraction de la roue complète, lors de leur mise en service ou lors d'opérations de maintenance.

GB-A-2 128 695 décrit un disque de frein pour matériel roulant ferroviaire, comprenant plusieurs secteurs fixés sur les côtés opposés d'une roue. Chaque segment comprend des nervures radiales, définissant des canaux radiaux qui permettent l'écoulement de l'air entre les secteurs et la roue. Ceci n'est pas satisfaisant, comme expliqué ci-dessus.

WO-A-2010 071 169 décrit un disque de frein pour matériel roulant ferroviaire, comprenant des nervures radiales et concentriques. La dissipation thermique est améliorée en comparaison avec un disque muni de nervures uniquement radiales. Cependant, le disque de frein décrit dans ce document est annulaire et monobloc. De plus, compte tenu de la faible surface de frottement de la couronne, il n'est pas possible de développer des efforts de freinage importants, ce qui en limite l'application. Par ailleurs, le montage du disque sur la roue et la transmission de puissance sont réalisés par l'usage de vis, ce qui génère à terme un problème de matage, empêchant le démontage du disque et réduisant la durée de vie de l'ensemble. Ce disque ne permet pas non plus de réduire la fatigue mécanique des garnitures au droit des trous de passage des éléments de fixation. Enfin, ce document vise principalement à résoudre le problème du bruit généré lors de la mise en oeuvre de trains à grande vitesse, et non l'augmentation de la durée de vie du disque.

Le but de la présente invention est de proposer un disque de frein ferroviaire amélioré, visant à remédier aux inconvénients de l'art antérieur, tout en conservant son interchangeabilité par rapport au matériel existant.

A cet effet, l'invention concerne un disque de frein pour matériel roulant ferroviaire destiné, d'une part, à être rendu solidaire d'une roue à freiner et, d'autre part, à coopérer en freinage avec une garniture de freinage montée sur une mâchoire mobile et susceptible d'être mise en contact avec le disque par l'action de moyens de commande, le disque comportant, sur une face interne opposée à une face de freinage, des éléments de rigidification comprenant des nervures dirigées au moins selon des directions radiales et concentriques par rapport à un axe central de la roue, de manière à maîtriser les déformations du disque dues à la chaleur de freinage, le disque comportant au moins quatre trous borgnes internes débouchants vers la roue et destinés à recevoir des goupilles de centrage et de pré-montage des secteurs du disque sur la roue caractérisé en ce qu'au moins deux des trous borgnes sont oblongs.

Ainsi, l'invention permet d'améliorer le système de freinage ferroviaire en réduisant, d'une part, l'effet de déjection du disque de frein en service et, d'autre part, les déformations du disque engendrées lors de sa fabrication et de son utilisation en freinage. Les nervures au moins radiales et concentriques permettent de rigidifier le disque et d'améliorer son comportement lors de la phase de freinage. Selon différentes variantes de l'invention, décrites ci-après, des configurations particulières des nervures permettent encore d'augmenter la durée de vie du disque. L'invention permet également de faciliter les opérations de montage et de démontage du disque de frein sur essieu, lors de son installation initiale ou lors d'une opération de maintenance, en particulier grâce à la présence des trous oblongs. En outre, ces trous oblongs permettent de supporter une légère dilatation différentielle du disque et/ou de la roue. Ainsi, la combinaison des nervures radiales, des nervures concentriques, des trous borgnes et des trous borgnes oblongs améliore fortement la durée de vie du disque.

Selon d'autres caractéristiques avantageuses de l'invention, prises isolément ou en combinaison :
- Le disque est constitué par au moins deux secteurs, de préférence trois secteurs, chaque secteur comportant deux trous borgnes internes débouchants vers la roue, dont au moins un trou borgne oblong.
- Chaque trou borgne oblong présente, par rapport à l'axe central, une largeur orthoradiale qui est supérieure à une largeur radiale, l'écart entre la largeur orthoradiale et la largeur radiale étant compris entre 2% et 30%, de préférence entre 5% et 15%, encore de préférence de l'ordre de 6%.
- Chaque trou borgne oblong est formé en élargissant un trou borgne radialement ou orthoradialement à l'axe central, notamment par usinage.
- Le disque est percé de plusieurs trous débouchants au niveau de sa face interne et de sa face de freinage, recevant chacun un bouchon d'obturation configuré pour atténuer le bruit dû aux effets de turbulence de l'air lorsque le matériel ferroviaire équipé de la roue et du disque est en mouvement.
- Chaque bouchon d'obturation comprend une fente et est déformable élastiquement, avec deux parois de la fente qui se rapprochent l'une de l'autre, lors de l'installation du disque sur la roue ou lors d'une opération de maintenance.
- Les éléments de rigidification comprennent des nervures radiales, des nervures concentriques et des nervures inclinées par rapport à une direction radiale, considérée à l'intersection entre les nervures inclinées et une ligne courbe située sensiblement à mi-chemin d'un bord intérieur et d'un bord extérieur du disque.
- La face interne du disque comprend plusieurs nervures inclinées de plus de 10° par rapport à la direction radiale considérée à l'intersection de la ligne courbe avec ces nervures inclinées.
- Une partie des nervures sont reliées entre elles pour former une nervure ondulée, notamment de forme sinusoïdale continue.
- Les nervures concentriques appartenant à la nervure ondulée sont disposées alternativement du côté du bord intérieur et du côté du bord extérieur du disque.
- Les éléments de rigidification comprennent des nervures radiales, des nervures concentriques et des nervures inclinées par rapport à une direction radiale, considérée à l'intersection entre les nervures inclinées et une ligne courbe située sensiblement à mi-chemin d'un bord intérieur et d'un bord extérieur du disque, une partie de ces nervures étant reliées entre elles pour former une nervure ondulée, les nervures concentriques appartenant à cette nervure ondulée étant disposées alternativement du côté du bord intérieur et du côté du bord extérieur du disque.
- Les éléments de rigidification relient des plots d'au moins deux types différents, ces plots étant formés en saillie sur la face interne du disque et adaptés pour appuyer contre la roue, avec au moins certains des plots qui sont munis, au niveau de leur face destinée à appuyer contre la roue, de congés anti-soudure.
- Le disque est constitué par au moins deux secteurs, chaque secteur comportant quatre coins arrondis ménagés à la jonction de quatre bords reliant la face interne et la face de freinage.
- Le disque est constitué par au moins deux secteurs comportant des moyens de raccordement entre eux, ces moyens de raccordement étant configurés pour coopérer, de par leurs formes complémentaires et sans pièce rapportée, avec les moyens de raccordement d'un secteur adjacent, les moyens de raccordement de deux secteurs entre eux étant constitués par des parties mâles - femelles réalisées en vis-à-vis sur les bords latéraux de deux secteurs adjacents, ces parties mâles - femelles de raccordement d'au moins deux secteurs adjacents comprenant des couples tenon - mortaise, la partie tenon mâle ménagée sur l'un des bords latéraux d'un secteur étant formée par deux languettes de forme globalement parallélépipédique, destinées à s'emboîter dans une rainure correspondante constituant la mortaise, ménagée en vis-à-vis des languettes sur le bord latéral en regard d'un secteur adjacent.
- Le disque est percé de douze trous débouchants répartis régulièrement de 30° en 30° autour de l'axe central, ces trous débouchants étant destinés à coïncider avec des trous débouchants correspondants d'un autre disque disposé de l'autre côté de la roue, de sorte que ces disques soient traversés simultanément par autant de vis munies, d'une part, de têtes venant en appui sur un épaulement interne de chaque trou situé d'un côté de la roue et, d'autre part, d'extrémités filetées se vissant dans autant d'écrous disposés au fond des trous correspondants de l'autre côté de la roue.

L'invention sera mieux comprise à la lecture de la description qui va suivre, donnée uniquement à titre d'exemple non limitatif et faite en référence aux dessins annexés sur lesquels :
- la figure 1 est une vue en perspective d'une roue de train équipée d'un disque de frein conforme à l'invention, ce disque appartenant à un système de freinage dont les autres éléments constitutifs ne sont pas montrés ;
- la figure 2 est une vue en élévation selon la flèche Il à la figure 1, montrant la roue équipée du système de freinage complet ;
- la figure 3 est une coupe à plus grande échelle selon la ligne III-III à la figure 2;
- les figures 4 et 5 sont des coupes partielles à plus grande échelle, respectivement selon la ligne IV-IV et la ligne V-V à la figure 2 ;
- la figure 6 est une vue en élévation selon la flèche VI à la figure 3 d'un secteur du disque de freinage conforme à l'invention, montrant la face du secteur destinée à être orientée vers la roue ;
- la figure 7 est une vue en perspective du segment de la figure 6 ;
- les figures 8 et 9 sont des vues à plus grande échelle des détails VIII et IX à la figure 6 ; et
- la figure 10 est une vue en perspective à plus grande échelle d'un bouchon d'obturation équipant le disque de frein de la figure 1.

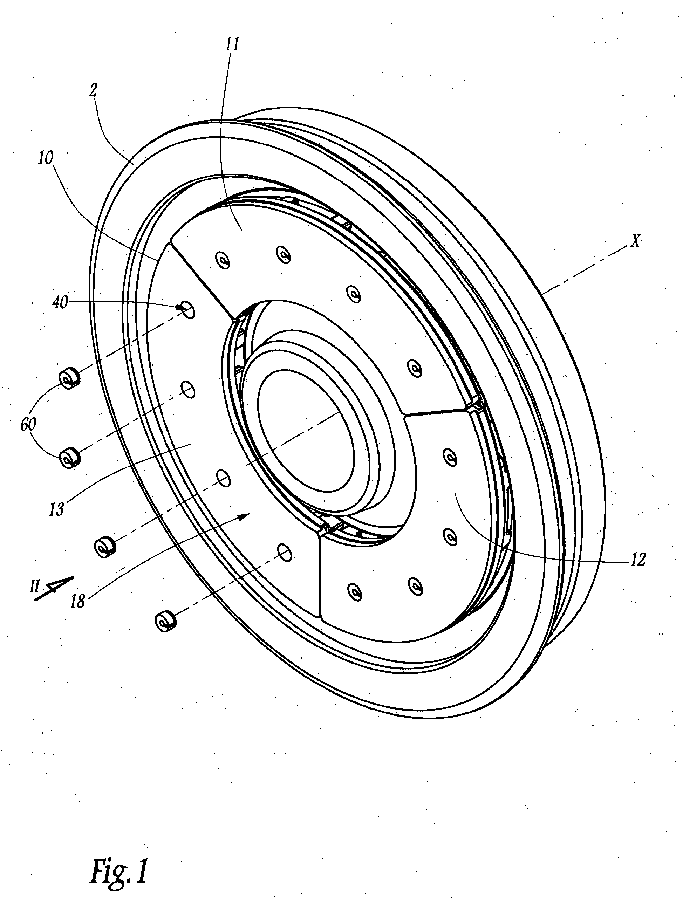

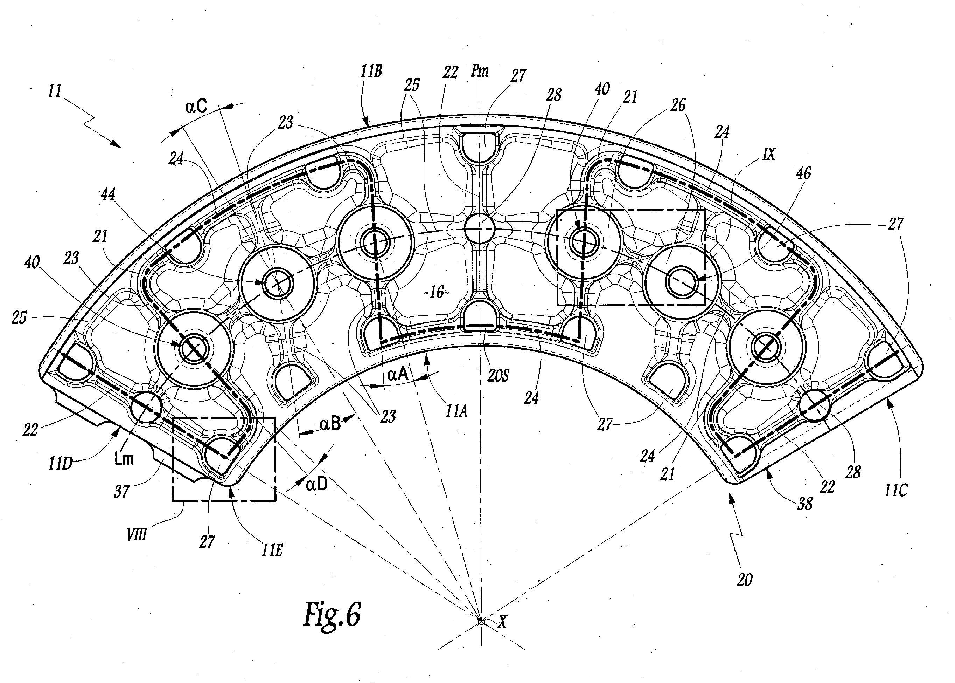

Sur les figures 1 à 5 est représenté un disque de frein 10 pour matériel roulant ferroviaire, du type flasqué sur roue. Sur les figures 6 à 9 est représenté un unique secteur 11 appartenant au disque 10.

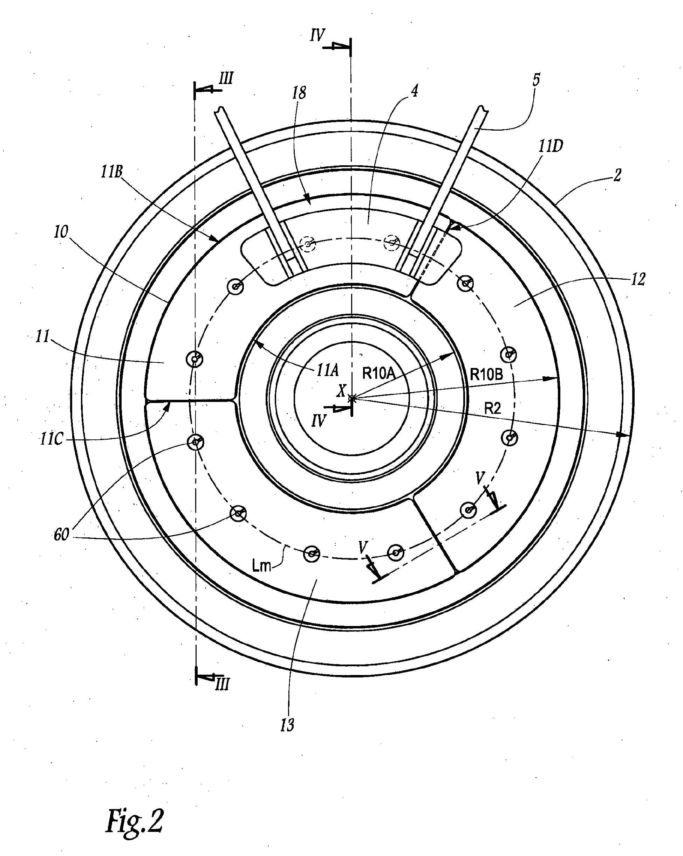

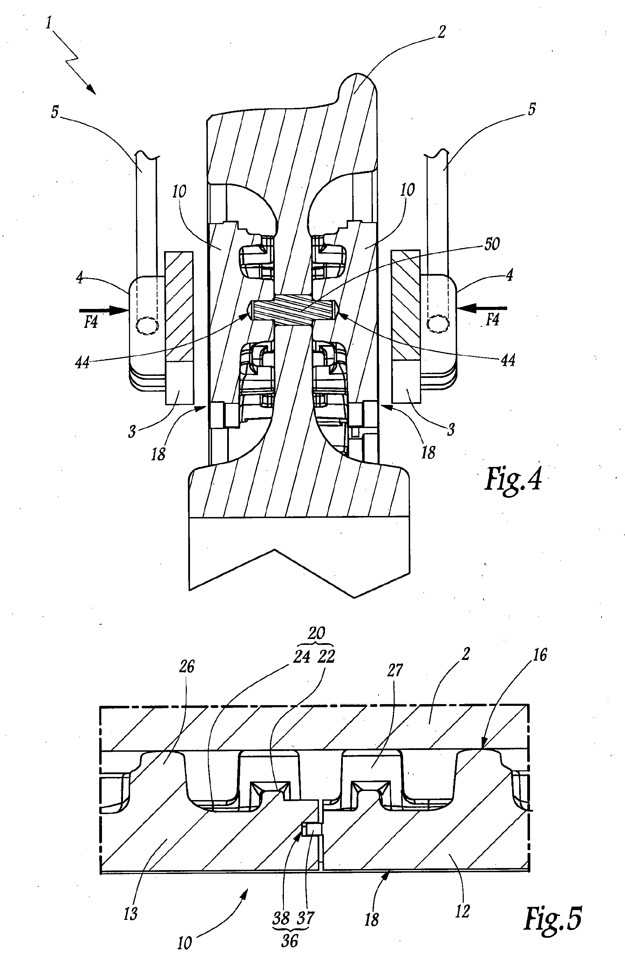

Le disque 10 appartient à un système 1 de freinage d'une roue 2. Dans un but de simplification, ce système 1 est montré au complet uniquement sur les figures 2 et 4.

Le disque 10 est constitué de trois secteurs 11, 12 et 13 disposés à 120° autour d'un axe central X de la roue 2. Le disque 10 présente une face interne 16 et une face externe de freinage 18 opposée à la face 16. Les deux faces 16 et 18 du disque 10 sont formées conjointement par les secteurs 11, 12 et 13, sont parallèles entre elles et perpendiculaires à l'axe X. Le secteur 11 comporte un bord intérieur courbe 11 A tourné vers l'axe X, un bord extérieur courbe 11B tourné à l'opposé de l'axe X, ainsi que deux bords latéraux plans 11C et 11 D. Les quatre bords 11 A-11 D s'étendent chacun suivant une direction parallèle à l'axe X et relient la face interne 16 et la face de freinage 18 du secteur 11. Les secteurs 12 et 13 comportent chacun des bords 11A-11D comparables à ceux du secteur 11, non référencés sur les figures dans un but de simplification.

A partir de l'axe X, on note R10A le rayon intérieur du disque 10 au niveau du bord 11A, R10B le rayon extérieur du disque 10 au niveau du bord 11B, et R2 le rayon extérieur de la roue 2. A titre d'exemple non limitatif, les rayons R10A, R10B et R2 mesurent de l'ordre de 184, 330 et 520 millimètres respectivement. La masse du disque 10 est de l'ordre de 19 kilogrammes. On note également Lm une ligne intermédiaire circulaire comprise entre les rayons R10A et R10B, dont l'intérêt sera exposé ci-après. A titre d'exemple, la ligne Lm s'étend suivant un cercle distant de 258,5 millimètres de l'axe X, cette distance étant prévue pour que le disque 10 s'adapte à la roue 2. Autrement dit, la ligne Lm est plus rapprochée du bord 11 B que du bord 11 A. Par la suite, à la précision des figures, on considère que la ligne courbe Lm est située sensiblement à mi-chemin du bord 11 B que du bord 11A. Bien entendu, les valeurs mentionnées ci-dessus dépendent des dimensions du matériel ferroviaire.

Le disque 10 est destiné, d'une part, à être rendu solidaire de la roue 2 à freiner située du côté de sa face interne 16 et, d'autre part, à coopérer lors d'une phase de freinage avec une garniture 3 située du côté de sa face externe 18. La garniture 3 de freinage est constituée en matériau composite, dont la composition dépend notamment des vitesses de service du matériel roulant équipé du système 1 et de la roue 2. La garniture 3 est fixée sur une mâchoire mobile 4, du côté tourné vers le disque 10 et la roue 2. La garniture 3 est susceptible d'être mise en contact avec la face externe 18 du disque 10 par l'action d'organes 5 de commande des mâchoires 4, qui exercent alors des forces F4, opposées selon une direction sensiblement parallèle à l'axe X et représentées par des flèches à la figure 4, sur ce disque 10.

En pratique, le système 1 comprend un disque 10 de freinage disposé de chaque côté de la roue 2, pour une meilleure efficacité et un meilleur équilibre de freinage. Autrement dit, le système 1 au complet comprend deux disques 10, deux garnitures 3 et deux mâchoires 4, chaque mâchoire 4 étant associée à des organes de commande 5 qui lui sont propres.

Comme montré aux figures 5 à 9 et en particulier à la figure 6, la face interne 16 comporte des éléments 20 de rigidification du disque 10. Plus précisément, ces éléments de rigidification 20 comprennent, sur chaque secteur 11-13, différents types de nervures 21, 22, 23, 24 et 25 configurées pour dissiper l'énergie thermique et maîtriser la déformation du disque 10 en service, notamment lors d'une phase de freinage.

En particulier, la face 16 du disque 10 comporte des nervures 22-25 dirigées, suivant un motif régulier, à la fois dans des directions radiales, concentriques et inclinées par rapport à l'axe X. Les nervures radiales 22 sont rectilignes et orientées suivant une direction radiale coupant l'axe X. Les nervures concentriques 24 et 25 présentent un profil courbé suivant un arc de cercle centré sur l'axe X. La hauteur des nervures intermédiaires et externes 25, mesurée dans une direction parallèle à l'axe X, est inférieure à la hauteur des nervures internes 24. Une partie des nervures 25 s'étend suivant la ligne Lm, comme détaillé ci-après.

Les nervures inclinées 23 sont orientées chacune suivant une direction propre, inclinée par rapport aux nervures 22 et 24, sans intersection avec l'axe X. Les nervures 23 sont néanmoins plus inclinées vers les nervures radiales 22 que vers les nervures concentriques 24-25. Les différentes nervures 23 présentent des inclinaisons particulières d'angles αA, αB, αC et αD par rapport à une direction radiale considérée à l'intersection de la nervure 23 et de la ligne Lm, comme montré à la figure 6. A titre d'exemple non limitatif, les angles αA, αB, αC et αD sont respectivement de l'ordre de 14°, 24°, 13° et 4°. En alternative, les nervures 23 peuvent être inclinées suivant des angles αA-αD différents par rapport à la direction radiale. De préférence, la face 16 comprend plusieurs nervures 23 inclinées de plus de 10° par rapport à la direction radiale considérée à l'intersection de cette ligne Lm avec les nervures 23. La répartition des nervures 23 est adaptée pour couvrir la face 16 et ainsi optimiser la rigidification du disque 10.

Les nervures 22 à 25 sont reliées entre elles par des nervures coudées 21 et des plots 26, 27 et 28. En outre, certaines des nervures 22-24 sont reliées entre elles pour former une nervure ondulée 20S, continue, de forme globalement sinusoïdale et qui est identifiée par une ligne en traits mixtes épais à la figure 6. Les nervures concentriques 24 composant cette nervure ondulée 20S sont disposées alternativement vers l'intérieur et vers l'extérieur du disque 10, c'est-à-dire alternativement du côté du bord intérieur 11A et du côté du bord extérieur 11 B. Au creux de cette nervure sinusoïdale 20S sont disposées d'autres nervures, à savoir une nervure radiale 22 située dans un plan médian Pm du secteur 11, deux nervures inclinées 23 situées de part et d'autre du plan médian Pm, ainsi qu'une nervure intermédiaire 24-25 qui s'étend concentriquement entre les plots 28, le long de la ligne Lm, du bord 11C vers le bord 11 D.

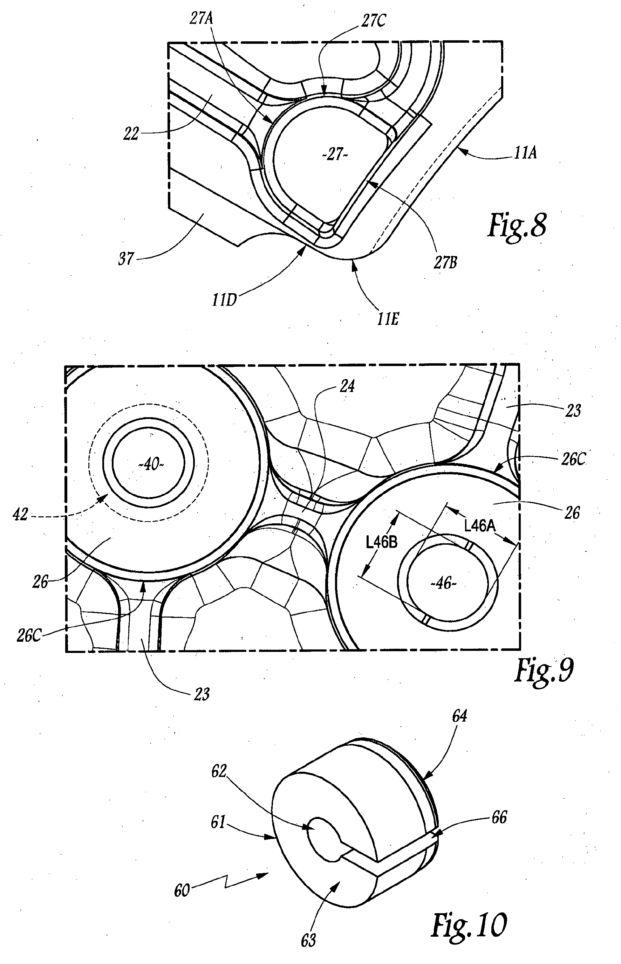

Pour leur part, les plots 26 à 28 sont adaptés pour appuyer contre la roue 2, au repos et en service lors du freinage. Ces plots 26-28 sont reliés par les nervures 21-25 de rigididication interposées entre eux. La hauteur des plots 26-28, mesurée selon une direction parallèle à l'axe X et perpendiculaire à la face 16, est supérieure à la hauteur des nervures 21-24, qui est elle-même supérieure à la hauteur des nervures 25. Les plots 26 présentent chacun un profil cylindrique en « O », avec des trous 40, 44 et 46 ménagés dans une direction parallèle à l'axe X et centrés sur la ligne Lm. Les plots 28 présentent chacun un profil cylindrique, de diamètre inférieur à celui des plots 26. Les plots 26 et 28 sont répartis concentriquement entre les bords 11 A et 11 B, en étant centrés sur la ligne Lm. Plus précisément, la face 16 comporte trois plots 28, situés respectivement dans le plan médian Pm, près du bord 11C et près du bord 11 D, avec trois plots 26 disposés entre chaque plot 28 sur la ligne Lm. Comme montré notamment à la figure 8, les plots 27 présentent une forme de « D » avec, d'une part, une partie arrondie 27A tournée vers l'intérieur du disque 10 et la ligne Lm et, d'autre part, une partie droite 27B tournée vers l'extérieur du disque 10 à l'opposé de la ligne Lm.

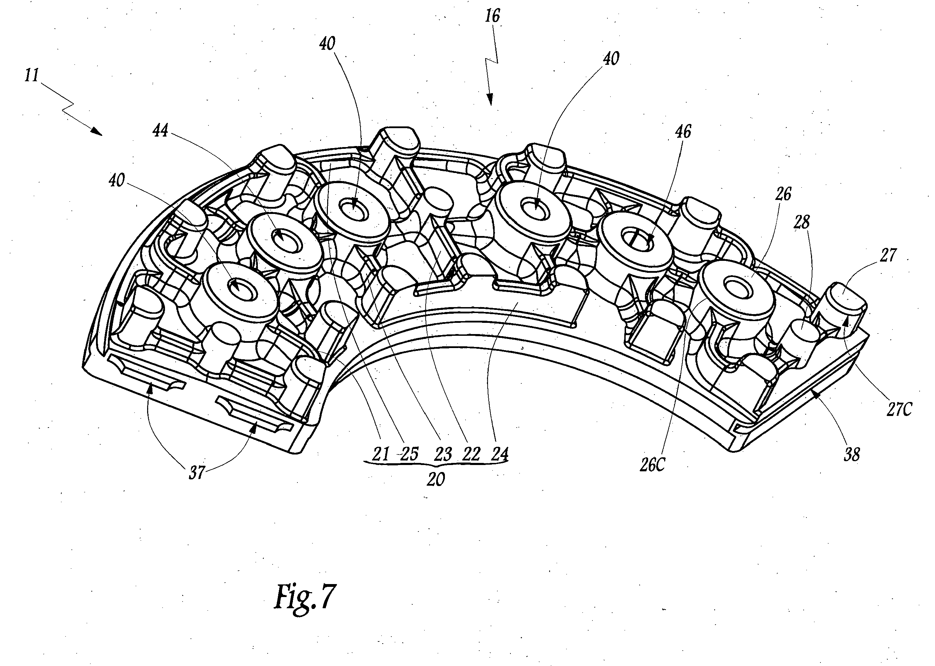

En pratique, la forme et la répartition des différents types de plots 26-28 en saillie sur la face 16 permet d'améliorer la dissipation d'énergie thermique, tout en évitant le collage des disques 10 sur la roue 2 par soudure superficielle à l'état solide. Cette soudure superficielle est en effet susceptible d'être causée par l'élévation de température, le contact métal contre métal et les contraintes mécaniques exercées sur le disque 10 et la roue 2 lors d'une phase de freinage. Par ailleurs, comme montré notamment à la figure 7, les plots 26 et 27 comportent des bordures chanfreinées et/ou présentant un rayon de courbure, respectivement 26C et 27C, au niveau de leur face destinée à appuyer contre la roue 2. La forme de ces bordures, ou congés 26C et 27C, permet de réduire encore le risque de soudure des plots 26 et 27 sur la roue 2 par diffusion thermique, lors d'une phase de freinage. Autrement dit, au moins certains des plots 26-28 sont munis de congés anti-soudure 26C et 27C.

De manière particulièrement avantageuse dans le cadre de l'invention, les nervures 21-25 et les plots 26-28, pris dans leur ensemble, sont configurés pour contrer les déformations du disque 10 dues à la chaleur de freinage. Autrement dit, la configuration des nervures 21-25 et des plots 26-28 permet d'obtenir un compromis entre l'étendue de la surface du disque 10 en appui contre la roue 2, l'efficacité de la dissipation thermique et la résistance du disque 10 à la déformation lors d'une phase de freinage, ainsi que la masse globale du disque 10.

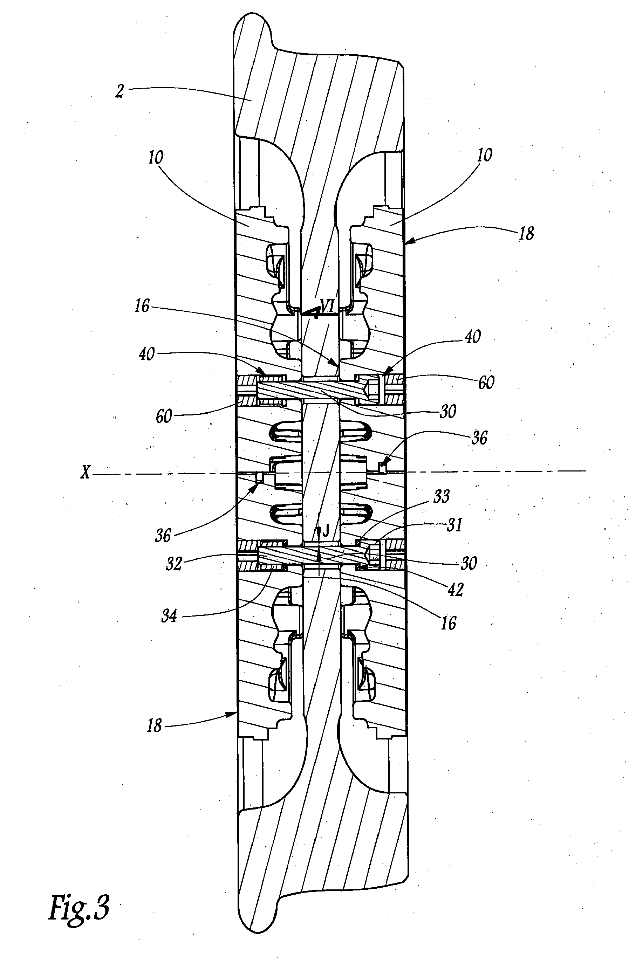

Comme montré à la figure 3, les secteurs 11 à 13 comprennent également, d'une part, des éléments individuels 30 de fixation sur la roue 2 et, d'autre part, des éléments 36 de raccordement des secteurs entre eux.

Comme montré aux figures 5 à 7, les éléments de raccordement 36 sont disposés librement sur les bords latéraux 11C et 11 D de chaque secteur 11 à 13 et coopèrent avec les éléments 36 des secteurs adjacents du fait de leurs formes complémentaires, sans pièce rapportée. Avantageusement, les éléments 36 comprennent des parties mâles 37 et femelles 38 réalisées en vis-à-vis, sur les bords latéraux 11C et 11 D de deux secteurs adjacents. Plus précisément, les éléments 36 sont des couples « tenon 37 - mortaise 38 » formés sur les bords latéraux 11C et 11 D respectifs des secteurs, le long d'une ligne radiale. Le bord 11 D d'un secteur comporte deux tenons ou languettes 37, de forme globalement parallélépipédique, destinés à s'emboîter dans une nervure 38 correspondante constituant la mortaise, réalisée sur toute la longueur du bord 11C appartenant au secteur adjacent situé en vis-à-vis.

Par ailleurs, comme montré en particulier aux figures 1 à 3, le disque 10 est percé de douze trous 40 débouchants au niveau des faces 16 et 18, à savoir quatre trous 40 par secteur 11, 12 ou 13. Les trous 40 sont ménagés au centre de certains des plots 26, parallèlement à l'axe X et en étant centrés sur la ligne Lm. Les trous 40 sont répartis régulièrement, de 30° en 30°, autour de l'axe X et sont destinés à coïncider avec des trous 40 correspondants percés à travers les secteurs d'un autre disque 10 disposé de l'autre côté de la roue 2. Ainsi, chaque secteur 11-13 est traversé simultanément par un même nombre d'éléments 30 de fixation à la roue 2, à savoir des vis 30 disposés dans les trous 40, parallèlement à l'axe X. Chaque vis 30 comporte une tête 31 et une extrémité filetée 32. Les têtes 31 sont appuyées, avec interposition d'une rondelle 33, contre un épaulement interne 42 ménagé dans chaque trou 40, tandis que les extrémités filetées 32 se vissent dans autant d'écrous 34 disposés au fond des trous 40 correspondants des autres secteurs opposés.

Comme montré aux figures 1 à 3, les trous 40 au fond desquels sont logés les têtes 31 et les extrémités 32 de vis 30 reçoivent chacun un bouchon d'obturation 60 de forme cylindrique. Ces bouchons 60 sont configurés pour atténuer le bruit dû aux effets de turbulences de l'air lorsque le matériel ferroviaire équipé de la roue 2 et du système de freinage 1 est en mouvement. Comme montré à la figure 10, chaque bouchon 60 comporte une surface cylindrique extérieure 61, un alésage intérieur 62 et des surfaces d'extrémité planes 63 et 64. Une fente radiale 66, de profil parallélépipédique, est ménagée dans le bouchon 60, reliant les parties 61, 62, 63 et 64.

En pratique, un bouchon 60 peut être déformé élastiquement par écrasement, avec les deux parois de la fente 66 qui se rapprochent l'une de l'autre. Lors de l'installation du disque 10 sur la roue 2 ou lors d'une opération de maintenance, un bouchon 60 peut ainsi être introduit au maillet dans le trou 40 où il se trouve alors bloqué par coincement radial, sans nécessiter l'utilisation d'une pièce rapportée. Autrement dit, un bouchon 60 se déforme élastiquement en compression puis expansion, avec un effet « ressort » qui facilite grandement son positionnement et son maintien en service.

Comme montré aux figures 4, 6, 7 et 9, chaque secteur 11-13 composant le disque 10 comporte également deux trous borgnes 44 et 46, qui sont débouchants vers la face 16 et non débouchants vers la face 18. Les trous 44 et 46 sont ménagés chacun concentriquement entre deux trous 40, à une même distance de l'axe X et en étant centrés sur la ligne Lm. Comme pour les trous 40, les trous 44 et 46 d'un premier disque 10 sont destinés à coïncider avec des trous correspondants, respectivement 44 et 46, ménagés à travers les secteurs d'un deuxième disque 10 disposé de l'autre côté de la roue 2.

Comme montré à la figure 4, des goupilles 50 sont insérées dans les trous borgnes 44 et 46 et traversent la roue 2, permettant ainsi le centrage et le pré-montage de l'ensemble des secteurs 11-13 constituant chaque disque 10, avant la mise en place des vis 30. En particulier, les goupilles 50 permettent de positionner la ligne Lm avec une grande précision par rapport à la roue 2. Les trous 44 et 46 sont ménagés au centre de certains des plots 26, autres que ceux qui sont percés par les trous 40. Parmi les six plots 26 de la face 16 de chaque secteur, quatre plots 26 sont percés par des trous 40, tandis que deux autres plots 26 reçoivent les trous borgnes 44 et 46.

Plus précisément, le trou 44 délimite une cavité cylindrique, tandis que le trou 46 délimite une cavité oblongue. Comme montré à la figure 9, la plus grande largeur L46A du trou 46 est supérieure à la plus petite largeur L46B du trou 46. La largeur L46A est orthoradiale, tandis que la largeur L46B est radiale. A titre d'exemple non limitatif, l'écart entre L46A et L46B est compris entre 2% et 30%, de préférence entre 5% et 15%, encore de préférence de l'ordre de 6%. Par exemple, L46A et L46B peuvent mesurer respectivement 17 et 16 millimètres, soit un écart de l'ordre de 6%. Avantageusement, la largeur L46B correspond au diamètre des trous 40 et 44, de sorte que le trou 46 peut être réalisé en formant un trou 44, puis en élargissant la largeur L46A par usinage ou tout autre procédé adapté.

Ainsi, le montage de chaque secteur 11-13 sur la roue 2 est grandement facilité pour un opérateur, dans la mesure où seul le positionnement de la goupille 50 dans le trou 44 nécessite un ajustement précis, tandis que le positionnement de la goupille 50 dans le trou 46 offre une certaine latitude du fait de son profil oblong. D'autre part, les trous oblongs 46 permettent de supporter une légère dilatation différentielle du disque 10 et/ou de la roue 2. De manière avantageuse, les trous oblongs 46 sont formés directement dans le disque 10 et ne reçoivent aucun autre élément que les goupilles rigides 50.

A ce stade, on remarque que les vis 30 sont disposées dans les trous débouchants 40 avec un jeu radial J ménagé dans la roue 2, tandis que les goupilles 50 sont disposées dans les trous borgnes 44 et 46 en étant ajustées dans la roue 2, sans jeu radial. Ainsi, les vis 30 et trous 40 permettent le blocage en translation suivant l'axe X des disques 10 contre la roue 2, alors que les goupilles 50 et trous 44, 46 permettent le blocage en rotation autour de l'axe X et la transmission de couple entre les disques 10 et la roue 2.

Sur les figures 6 et 8, on remarque également que chaque secteur 11-13 comporte quatre coins arrondis 11 E ménagés à la jonction des bords 11 A, 11 B, 11C et 11 D. Les concentrations de chaleur sont réduites dans les coins arrondis 11 E, alors que les coins des secteurs existants comportent généralement des angles vifs, qui sont plus affectés par ces concentrations de chaleur. Ainsi, les coins arrondis 11 E permettent de réduire la déformation du disque 10 due à ces concentrations de chaleur, ce qui réduit d'autant l'usure de la garniture 3. A titre d'exemple non limitatif, chaque coin 11E présente un rayon de courbure, considéré dans un plan perpendiculaire à l'axe X, qui est compris entre 5 et 20 millimètres, de préférence de l'ordre de 10 à 12 millimètres.

Comme montré à la figure 6, le secteur 11 est symétrique par rapport à un plan médian Pm comprenant l'axe X et radial par rapport à cet axe X, à l'exception des éléments de raccordement 36 et des trous 44-46.

En variante non représentée, le système de freinage 1 comprend un seul disque de frein 10, une seule garniture 3 et une seule mâchoire 4 disposés d'un unique côté de la roue 2.

Selon une autre variante non représentée, le ou les disques 10 sont monoblocs. Dans ce cas, le disque monobloc 10 comprend au moins quatre trous borgnes 44-46, parmi lesquels au moins trois trous borgnes oblongs 46. De préférence, le disque monobloc 10 comprend six trous borgnes 44-46, dont trois trous oblongs 46.

Selon une autre variante non représentée, le disque 10 comprend deux secteurs, quatre secteurs, cinq secteurs ou plus. Avantageusement, le disque 10 comprend entre deux et cinq secteurs centrés sur l'axe X. Pour une masse du disque 10 sensiblement équivalente, des secteurs plus nombreux présentent une masse individuelle plus réduite, de sorte que la manutention du disque 10 lors d'une opération de maintenance est facilitée. Chaque secteur comprend alors deux trous borgnes 44-46, dont au moins un trou borgne oblong 46.

Autrement dit, que le disque 10 soit monobloc ou composé de plusieurs secteurs, il comprend au moins quatre trous borgnes 44-46, parmi lesquels au moins deux trous borgnes oblongs 46.

Selon une variante particulière non représentée, le disque 10 comprend uniquement des trous borgnes oblongs 46, excepté un unique trou borgne cylindrique 44, voire même aucun trou borgne cylindrique 44.

Selon une autre variante non représentée, les trous borgnes oblongs 46 ne sont pas orthoradiaux mais radiaux par rapport à l'axe X. Dans ce cas, chaque trou oblong 46 présente, par rapport à l'axe central X, une largeur orthoradiale L46A qui est inférieure à sa largeur radiale L46B. L'écart entre la largeur orthoradiale L46A et la largeur radiale L46B est conforme aux ordres de grandeur mentionnés plus haut. En alternative, les trous borgnes oblongs 46 peuvent être concentriques par rapport à l'axe X, c'est-à-dire légèrement incurvés par rapport à la direction orthoradiale. Selon une autre alternative, l'ensemble de trous borgnes oblongs 46 peut inclure des trous borgnes radiaux et orthoradiaux, notamment lorsque le disque 10 est monobloc.

Selon une autre variante non représentée, la face 16 de chacun des secteurs 11-13 du disque 10 peut être configurée de manière différente sans sortir du cadre de l'invention. Par exemple, les nervures inclinées 23 peuvent présenter des inclinaisons différentes par rapport à la direction radiale. Selon une autre variante, la face 16 peut comporter des nervures radiales 22 et des nervures concentriques 24, mais pas de nervures inclinées 23. Dans ce cas, les nervures inclinées 23 peuvent être remplacées par des nervures radiales 22. Autrement dit, le disque 10 comporte des nervures dirigées au moins selon des directions radiales et concentriques par rapport à l'axe central X. Selon une autre variante, la face 16 peut comporter des plots 26, ainsi qu'un unique type de plots 27 ou 28. Toutefois, le comportement du disque 10 lors de la phase de freinage est amélioré lorsque la face 16 comporte les différents types de nervures 21-25 reliant les différents types de plots 26-28, pour un meilleur compromis entre rigidité, dissipation thermique et masse du disque 10.

En pratique, de préférence, les plots 26-28 sont adaptés pour venir en contact avec la roue 2, tandis que les nervures 21-25 sont adaptées pour ménager un écart entre elles et la roue 2. Du fait de cet écart permettant le passage de l'air, le refroidissement du disque 10 est amélioré. Les plots 26-28 et leurs formes particulières permettent d'augmenter la surface de contact du disque 10 avec la toile de la roue 2, ce qui limite la pression spécifique de contact et empêche la formation de dommages irréversibles, non visibles, sur la toile de roue 2, qui pourraient à terme affecter la sécurité des circulations, en allant notamment jusqu'à provoquer une rupture de la roue 2. Ainsi, l'invention permet d'obtenir un disque de frein 10 d'utilisation fiable et sécurisée, tout en conservant son interchangeabilité par rapport au matériel existant.

En outre, les caractéristiques techniques des différents modes de réalisation peuvent être, en totalité ou pour certaines d'entre elles, combinées entre elles. Ainsi, le disque de frein peut être adapté en termes de coût et de performance.

## Revendications

1. Disque de frein (10) pour matériel roulant ferroviaire destiné, d'une part, à être rendu solidaire d'une roue à freiner (2) et, d'autre part, à coopérer en freinage avec une garniture de freinage (3) montée sur une mâchoire mobile (4) et susceptible d'être mise en contact avec le disque (10) par l'action de moyens de commande (5), le disque (10) comportant, sur une face interne (16) opposée à une face de freinage (18), des éléments de rigidification (20) comprenant des nervures (22-25) dirigées au moins selon des directions radiales et concentriques par rapport à un axe central (X) de la roue (2), de manière à maîtriser les déformations du disque (10) dues à la chaleur de freinage, le disque (10) comportant au moins quatre trous borgnes internes (44, 46) débouchants vers la roue (2) et destinés à recevoir des goupilles (50) de centrage et de pré-montage des secteurs du disque (10) sur la roue (2), **caractérisé en ce qu'**au moins deux des trous borgnes (46) sont oblongs.

2. Disque selon la revendication 1, **caractérisé en ce que** le disque (10) est constitué par au moins deux secteurs (11, 12 ; 11, 12, 13), de préférence trois secteurs (11, 12, 13), chaque secteur comportant deux trous borgnes internes (44, 46) débouchants vers la roue (2), dont au moins un trou borgne oblong (46).

3. Disque selon l'une des revendications précédentes, **caractérisé en ce que** chaque trou borgne oblong (46) présente, par rapport à l'axe central (X), une largeur orthoradiale (L46A) qui est supérieure à une largeur radiale (L46B), l'écart entre la largeur orthoradiale (L46A) et la largeur radiale (L46B) étant compris entre 2% et 30%, de préférence entre 5% et 15%, encore de préférence de l'ordre de 6%.

4. Disque selon l'une des revendications précédentes, **caractérisé en ce que** chaque trou borgne oblong (46) est formé en élargissant un trou borgne radialement ou orthoradialement à l'axe central (X), notamment par usinage.

5. Disque selon l'une des revendications précédentes, **caractérisé en ce que** le disque (10) est percé de plusieurs trous débouchants (40) au niveau de sa face interne (16) et de sa face de freinage (18), recevant chacun un bouchon d'obturation (60) configuré pour atténuer le bruit dû aux effets de turbulence de l'air lorsque le matériel ferroviaire équipé de la roue (2) et du disque (10) est en mouvement.

6. Disque selon la revendication 5, **caractérisé en ce que** chaque bouchon d'obturation (60) comprend une fente (66) et est déformable élastiquement, avec deux parois de la fente 66 qui se rapprochent l'une de l'autre, lors de l'installation du disque (10) sur la roue (2) ou lors d'une opération de maintenance.

7. Disque selon l'une des revendications précédentes, **caractérisé en ce que** les éléments de rigidification (20) comprennent des nervures radiales (22), des nervures concentriques (24, 25) et des nervures inclinées (23) par rapport à une direction radiale, considérée à l'intersection entre les nervures inclinées (23) et une ligne courbe (Lm) située sensiblement à mi-chemin d'un bord intérieur (11A) et d'un bord extérieur (11B) du disque (10).

8. Disque selon la revendication 7, **caractérisé en ce que** la face interne (16) du disque (10) comprend plusieurs nervures inclinées (23) de plus de 10° par rapport à la direction radiale considérée à l'intersection de la ligne courbe (Lm) avec ces nervures inclinées (23).

9. Disque selon l'une des revendications précédentes, **caractérisé en ce qu'**au moins une partie des nervures (22-24) sont reliées entre elles pour former une nervure ondulée (20S), notamment de forme sinusoïdale continue.

10. Disque selon la revendication 9, **caractérisée en ce que** les nervures concentriques (24) appartenant à la nervure ondulée (20S) sont disposées alternativement du côté du bord intérieur (11A) et du côté du bord extérieur (11 B) du disque (10).

11. Disque selon l'une des revendications 1 à 6, **caractérisé en ce que** les éléments de rigidification (20) comprennent des nervures radiales (22), des nervures concentriques (24, 25) et des nervures inclinées (23) par rapport à une direction radiale, considérée à l'intersection entre les nervures inclinées (23) et une ligne courbe (Lm) située sensiblement à mi-chemin d'un bord intérieur (11 A) et d'un bord extérieur (11 B) du disque (10), une partie de ces nervures (22-24) étant reliées entre elles pour former une nervure ondulée (20S), les rainures concentriques (24) appartenant à cette nervure ondulée (20S) étant disposées alternativement du côté du bord intérieur (11A) et du côté du bord extérieur (11 B) du disque (10).

12. Disque selon l'une des revendications précédentes, **caractérisé en ce que** les éléments de rigidification (20) relient des plots (26, 27, 28) d'au moins deux types différents, ces plots (26, 27, 28) étant formés en saillie sur la face interné (16) du disque (10) et adaptés pour appuyer contre la roue (2), avec au moins certains des plots (26, 27, 28) qui sont munis, au niveau de leur face destinée à appuyer contre la roue (2), de congés anti-soudure (26C, 27C).

13. Disque selon l'une des revendications précédentes, caractérisé en ce le disque (10) est constitué par au moins deux secteurs (11, 12 ; 11, 12, 13), chaque secteur comportant quatre coins arrondis (11 E) ménagés à la jonction de quatre bords (11A, 11 B, 11C, 11 D) reliant la face interne (16) et la face de freinage (18).

14. Disque selon l'une des revendications précédentes, caractérisé en que le disque (10) est constitué par au moins deux secteurs (11, 12; 11, 12, 13) comportant des moyens (36) de raccordement entre eux, ces moyens de raccordement (36) étant configurés pour coopérer, de par leurs formes complémentaires et sans pièce rapportée, avec les moyens de raccordement (36) d'un secteur adjacent, les moyens de raccordement (36) de deux secteurs entre eux étant constitués par des parties mâles - femelles réalisées en vis-à-vis sur les bords latéraux (11C, 11 D) de deux secteurs adjacents, ces parties mâles - femelles de raccordement d'au moins deux secteurs adjacents comprenant des couples tenon (37) - mortaise (38), la partie tenon mâle ménagée sur l'un des bords latéraux (11 D) d'un secteur étant formée par deux languettes (37) de forme globalement parallélépipédique, destinées à s'emboîter dans une rainure correspondante (38) constituant la mortaise, ménagée en vis-à-vis des languettes (37) sur le bord latéral (11 C) en regard d'un secteur adjacent.

15. Disque selon l'une des revendications précédentes, **caractérisé en ce que** le disque (10) est percé de douze trous débouchants (40) répartis régulièrement de 30° en 30° autour de l'axe central (X), ces trous débouchants (40) étant destinés à coïncider avec des trous débouchants (40) correspondants d'un autre disque (10) disposé de l'autre côté de la roue (2), de sorte que ces disques (10) soient traversés simultanément par autant de vis (30) munies, d'une part, de têtes (31) venant en appui sur un épaulement interne (42) de chaque trou (41) situé d'un côté de la roue (2) et, d'autre part, d'extrémités filetées (32) se vissant dans autant d'écrous (34) disposés au fond des trous (40) correspondants de l'autre côté de la roue (2).

## Patentansprüche

1. Bremsscheibe (10) für rollendes Eisenbahnmaterial, die einerseits vorgesehen ist, mit einem zu bremsenden Rad (2) verbunden zu werden und andererseits in Bezug auf die Bremsung mit einem Bremsbelagmaterial (3) zusammenzuarbeiten, das an einem beweglichen Bremssattel (4) montiert ist und geeignet ist, mit der Scheibe (10) durch die Betätigung von Steuermitteln (5) in Kontakt gebracht zu werden, wobei die Scheibe (10) an einer Innenseite (16) entgegengesetzt zu einer Bremsfläche (18) Versteifungselemente (20) aufweist, die mindestens gemäß radialen und konzentrischen Richtungen in Bezug auf eine Mittelachse (X) des Rades (2) gerichtete Rippen (22 - 25) umfasst, derart, dass die aufgrund der Bremshitze auftretenden Verformungen der Scheibe (10) beherrscht werden, wobei die Scheibe (10) mindestens vier Innensackbohrungen (44, 46) aufweist, die zum Rad (2) münden und vorgesehen sind, Stifte (50) für die Zentrierung und Vormontage der Sektoren der Scheibe (10) an dem Rad (2) aufzunehmen, **dadurch gekennzeichnet, dass** mindestens zwei der Sacklöcher (46) Langlöcher sind.

2. Scheibe nach Anspruch 1, **dadurch gekennzeichnet, dass** die Scheibe (10) aus mindestens zwei Sektoren (11, 12; 11, 12, 13), vorzugsweise drei Sektoren (11, 12, 13) besteht, wobei jeder Sektor zwei Innensacklöcher (44, 46) aufweist, die zu dem Rad (2) münden, wobei mindestens eines ein Langsackloch (46) ist.

3. Scheibe nach einem der vorhergehenden Ansprüche, **dadurch gekennzeichnet, dass** jedes Langsackloch (46) in Bezug auf die Mittelachse (X) eine orthoradiale Breite (L46A) aufweist, die größer als eine radiale Breite (L46B) ist, wobei die Abweichung zwischen der orthoradialen Breite (L46A) und der radialen Breite (L46B) zwischen 2% und 30%, vorzugsweise zwischen 5% und 15%, noch bevorzugter in der Größenordnung von 6% liegt.

4. Scheibe nach einem der vorhergehenden Ansprüche, **dadurch gekennzeichnet, dass** jedes Langsackloch (46) dadurch gebildet wird, dass ein Sackloch radial oder orthoradial zur Mittelachse (X), insbesondere durch Bearbeitung, vergrößert wird.

5. Scheibe nach einem der vorhergehenden Ansprüche, **dadurch gekennzeichnet, dass** die Scheibe (10) von mehreren Löchern (40) durchbohrt ist, die an ihrer Innenseite (16) und ihrer Bremsfläche (18) münden und die jeweils einen Verschlussstopfen (60) aufnehmen, der ausgebildet ist, das Geräusch zu dämpfen, das aufgrund der Wirkung von Luftturbulenzen entsteht, wenn das Eisenbahnmaterial, das mit dem Rad (2) und der Scheibe (10) ausgerüstet ist, in Bewegung ist.

6. Scheibe nach Anspruch 5, **dadurch gekennzeichnet, dass** jeder Verschlussstopfen (60) einen Spalt (66) umfasst und elastisch verformbar ist mit zwei Wänden des Spaltes (66), die sich der bei der Installation der Scheibe (10) an dem Rad (2) oder bei einer Wartungsoperation zueinander annähern.

7. Scheibe nach einem der vorhergehenden Ansprüche, **dadurch gekennzeichnet, dass** die Versteifungselemente (20) radiale Rippen (22), konzentrische Rippen (24, 25) und in Bezug auf eine radiale Richtung geneigte Rippen (23) umfassen, wobei die radiale Richtung bei dem Schnittpunkt zwischen den geneigten Rippen (23) und einer gekrümmten Linie (Lm) betrachtet wird, die sich im Wesentlichen auf halbem Wege zwischen einem Innenrand (11A) und einem Außenrand (11B) der Scheibe (10) befindet.

8. Scheibe nach Anspruch 7, **dadurch gekennzeichnet, dass** die Innenseite (16) der Scheibe (10) mehrere geneigte Rippen (23) mit mehr als 10° in Bezug auf die radiale Richtung, die bei dem Schnittpunkt der gekrümmten Linie (Lm) mit diesen geneigten Rippen (23) betrachtet wird.

9. Scheibe nach einem der vorhergehenden Ansprüche, **dadurch gekennzeichnet, dass** mindestens ein Teil der Rippen (22-24) untereinander verbunden sind, um eine gewellte Rippe (20S), insbesondere in kontinuierlicher Sinusform zu bilden.

10. Scheibe nach Anspruch 9, **dadurch gekennzeichnet, dass** die konzentrischen Rippen (24), die zu der gewellten Rippe (20S) gehören, wechselseitig an der Seite des Innenrandes (11A) und an der Seite des Außenrandes (11B) der Scheibe (10) angeordnet sind.

11. Scheibe nach einem der Ansprüche 1 bis 6, **dadurch gekennzeichnet, dass** die Versteifungselemente (20) radiale Rippen (22), konzentrische Rippen (24, 25) und in Bezug auf eine radiale Richtung geneigte Rippen umfassen, wobei die radiale Richtung an dem Schnittpunkt zwischen den geneigten Rippen (23) und einer gekrümmten Linie (Lm) betrachtet wird, die sich im Wesentlichen auf halbem Wege eines Innenrandes (11A) und eines Außenrandes (11B) der Scheibe befindet, wobei ein Teil dieser Rippen (22 - 24) untereinander verbunden sind, um eine gewellte Rippe (S) zu bilden, wobei die konzentrischen Rillen (24), die zu dieser gewellten Rippe (20S) gehören, wechselseitig an der Seite des Innenrandes (11A) und an der Seite des Außenrandes (11B) der Scheibe (10) angeordnet sind.

12. Scheibe nach einem der vorhergehenden Ansprüche, **dadurch gekennzeichnet, dass** die Versteifungselemente (20) Ansätze (26, 27, 28) mindestens zweier unterschiedlicher Arten verbinden, wobei diese Ansätze (26, 27, 28) hervorspringend an der Innenseite (16) der Scheibe (10) gebildet sind und geeignet sind, gegen das Rad (2) zu drücken, wobei mindestens zwei bestimmte der Ansätze (26, 27, 28), an ihrer Fläche, die vorgesehen ist, gegen das Rad (2) zu drücken, mit Kehlen (26C, 27C) zum Verhindern des Verschweißens ausgerüstet sind.

13. Scheibe nach einem der vorhergehenden Ansprüche, **dadurch gekennzeichnet, dass** die Scheibe (10) aus mindestens zwei Sektoren (11, 12; 11, 22, 13) besteht, wobei jeder Sektor vier abgerundete Ecken (11E) aufweist, die an der Verbindung von vier Rändern (11A, 11B, 11C, 11D) eingearbeitet sind, die die Innenseite (16) und die Bremsfläche (18) verbindet.

14. Scheibe nach einem der vorhergehenden Ansprüche, **dadurch gekennzeichnet, dass** die Scheibe (10) aus mindestens zwei Sektoren (11, 12; 11, 12, 13) besteht, die Mittel (36) zur Verbindung untereinander aufweisen, wobei diese Verbindungsmittel (36) ausgebildet sind, durch ihre komplementären Formen und ohne angefügtes Teil mit den Verbindungsmitteln (36) eines benachbarten Sektors zusammenzuarbeiten, wobei die Verbindungsmittel (36) von zwei Sektoren untereinander aus Einsteck-/Aufnahmeteilen bestehen, die gegenüberliegend an den Seitenrändern (11C, 11D) von zwei benachbarten Sektoren angeordnet sind, wobei diese Einsteck-/Aufnahmeteile zur Verbindung von mindestens zwei benachbarten Sektoren Paare Zapfen (37) - Zapfenloch (38) umfassen, wobei das Zapfeneinsteckteil, das an einem der Seitenränder (11D) eines Sektors eingearbeitet ist, durch zwei im Wesentlichen quaderförmige Zungen (37) gebildet wird, die vorgesehen sind, in eine korrespondierende Nut (38) einzugreifen, die das Zapfenloch bildet und gegenüberliegend zu den Zungen (37) an dem gegenüberliegenden Seitenrand (11C) eines benachbarten Sektors eingearbeitet ist.

15. Scheibe nach einem der vorhergehenden Ansprüche, **dadurch gekennzeichnet, dass** die Scheibe (10) von zwölf Durchlassöffnungen (40) durchbrochen ist, die gleichmäßig von 30° zu 30° um die Mittelachse (X) herum verteilt sind, wobei diese Durchlassöffnungen (40) dazu dienen, mit korrespondierenden Durchlassöffnungen (40) einer anderen Scheibe (10) übereinzustimmen, die an der anderen Seite des Rades (2) angeordnet ist, derart, dass diese Scheiben (10) gleichzeitig von so vielen Schrauben (30) durchgriffen werden, die einerseits mit Köpfen (31), die sich an einer auf einer Seite des Rades (2) liegenden Innenschulter (42) jedes Lochs (41) abstützen, und andererseits mit mit Gewinde versehenen Enden (32) ausgerüstet sind, die in ebenso viele Muttern (34) geschraubt werden, die am Boden der entsprechenden Löcher (40) der anderen Seite des Rades (2) angeordnet sind.

## Claims

1. Brake disc (10) for railway rolling stock intended firstly to be secured to a wheel to be braked (2) and secondly to cooperate in braking with a brake lining (3) mounted on a movable jaw (4) and able to be put in contact with the disc (10) through the action of control means (5), the disc (10) comprising, on an internal face (16) opposite to a braking face (18), stiffening elements (20) comprising ribs (22-25) directed at least in directions that are radial and concentric with respect to a central axis (X) of the wheel (2), so as to control deformations of the disc (10) due to the braking heat, the disc (10) comprising at least four internal blind holes (44, 46) emerging towards the wheel (2) and intended to receive pins (50) for centring and pre-mounting of the disc sectors (10) on the wheel (2), **characterised in that** at least two of the blind holes (46) are oblong.

2. Disc according to claim 1, **characterised in that** the disc (10) is formed by at least two sectors (11, 12; 11, 12, 13), preferably three sectors (11, 12, 13), each sector comprising two internal blind holes (44, 46) emerging towards the wheel (2), including at least one oblong blind hole (46).

3. Disc according to one of the preceding claims, **characterised in that** each oblong blind hole (46) has, with respect to the central axis (X), an orthoradial width (L46A) that is greater than a radial width (L46B), the difference between the orthoradial width (L46A) and the radial width (L46B) being between 2% and 30%, preferably between 5% and 15%, even more preferably around 6%.

4. Disc according to one of the preceding claims, **characterised in that** each oblong blind hole (46) is formed by widening a blind hole radially or orthoradially to the central axis (X), in particular by machining.

5. Disc according to one of the preceding claims, **characterised in that** the disc (10) has in it a plurality of through holes (40) at its internal face (16) and its braking face (18), each receiving a closure plug (60) configured so as to attenuate the noise due to the effects of turbulence of the air when the rail vehicle equipped with the wheel (2) and disc (10) is moving.

6. Disc according to claim 5, **characterised in that** each closure plug (60) comprises a slot (66) and is elastically deformable, with two walls of the slot (66) approaching each other, when the disc (10) is installed on the wheel (2) or during a maintenance operation.

7. Disc according to one of the preceding claims, **characterised in that** the stiffening elements (20) comprise radial ribs (22), concentric ribs (24, 25) and ribs (23) inclined with respect to a radial direction, considered at the intersection between the inclined ribs (23) and a curved line (Lm) situated substantially halfway between an inner edge (11A) and an outer edge (11B) of the disc (10).

8. Disc according to claim 7, **characterised in that** the internal face (16) of the disc (10) comprises a plurality of ribs (23) inclined by more than 10° with respect to the radial direction considered at the intersection of the curved line (Lm) with these inclined ribs (23).

9. Disc according to one of the preceding claims, **characterised in that** at least some of the ribs (22-24) are connected together in order to form a corrugated rib (20S), in particular with a continuous sinusoidal shape.

10. Disc according to claim 9, **characterised in that** the concentric ribs (24) forming part of the corrugated rib (20S) are disposed alternately on the inner edge (11A) and on the outer edge (11B) of the disc (10).

11. Disc according to one of claims 1 to 6, **characterised in that** the stiffening elements (20) comprise radial ribs (22), concentric ribs (24, 25) and ribs (23) inclined with respect to a radial direction, considered at the intersection between the inclined ribs (23) and a curved line (Lm) situated substantially halfway between an inner edge (11A) and an outer edge (11B) of the disc (10), some of these ribs (22-24) being connected together in order to form a corrugated rib (20S), the concentric grooves (24) forming part of this corrugated rib (20S) being disposed alternately on the inner edge (11A) and on the outer edge (11B) of the disc (10).

12. Disc according to one of the preceding claims, **characterised in that** the stiffening elements (20) connect studs (26, 27, 28) of at least two different types, these studs (26, 27, 28) being formed so as to project on the internal face (16) of the disc (10) and being suitable for bearing against the wheel (2), with at least some of the studs (26, 27, 28) being provided, at their face intended to bear against the wheel (2), with anti-weld fillets (26C, 27C).

13. Disc according to one of the preceding claims, **characterised in that** the disc (10) is formed by at least two sectors (11, 12; 11, 12, 13), each sector comprising four rounded corners (11E) provided at the junction of four edges (11A, 11B, 11C, 11D) connecting the internal face (16) and the braking face (18).

14. Disc according to one of the preceding claims, **characterised in that** the disc (10) is formed by at least two sectors (11, 12; 11, 12, 13) comprising means (36) for connecting them together, these connection means (36) being configured so as to cooperate, through their complementary shapes and without any attached piece, with the connection means (36) of an adjacent sector, the means (36) for connecting two sectors together consisting of male-female parts produced facing each other on the lateral edges (11C, 11D) of two adjacent sectors, these male-female parts for connecting at least two adjacent sectors comprising pairs consisting of tenon (37) and mortise (38), the male tenon part provided on one of the lateral edges (11D) of a sector being formed by two tongues (37) with a roughly parallelepipedal shape, intended to fit in a corresponding groove (38) constituting the mortise, provided opposite the tongues (37) on the facing lateral edge (11C) of an adjacent sector.

15. Disc according to one of the preceding claims, **characterised in that** the disc (10) has in it twelve through holes (40) distributed regularly every 30° around the central axis (X), these through holes (40) being intended to coincide with corresponding through holes (40) in another disc (10) disposed on the other side of the wheel (2), so that these discs (10) have the same number of screws (30) passing through them simultaneously, provided firstly with heads (31) coming into abutment on an internal shoulder (42) of each hole (41) situated on one side of the wheel (2) and secondly with threaded ends (32) screwed in the same number of nuts (34) disposed at the bottom of the corresponding holes (40) on the other side of the wheel (2).
